# EUROPÄISCHE PATENTSCHRIFT

(11) **EP 1 716 993 B1**
(45) Veröffentlichungstag und Bekanntmachung des Hinweises auf die Patenterteilung: **10.09.2008**
(21) Anmeldenummer: 06008432.4
(22) Anmeldetag: 24.04.2006
(51) Int. Cl.: B27D 1/00, B32B 21/14, B60R 13/02

(54) **Verfahren zur Herstellung eines furnierten Formteils**
Method of manufacturing a veneered shaped article
Procédé de fabrication d'une pièce plaquée formée

(30) Priorität: 25.04.2005 DE 102005019106
(43) Veröffentlichungstag der Anmeldung: 02.11.2006
(73) Patentinhaber: Sellner GmbH, 91564 Neuendettelsau (DE)
(72) Erfinder: Leimeister, Thomas, 91564 Neuendettelsau (DE)
(74) Vertreter: Sperling, Rüdiger

(56) Entgegenhaltungen:
- EP-A- 0 612 609
- WO-A-01/17822
- FR-A- 2 760 208

## Beschreibung

Die Erfindung betrifft ein Verfahren zur Herstellung eines furnierten Formteils, insbesondere eines Einbauteils für die Innenausstattung von Kraftfahrzeugen, das einen Träger und ein Furnier aufweist.

Bei bekannten Verfahren wird zunächst ein Metallträger, beispielsweise eine Aluminiumplatte, zugeschnitten und gezogen. Dabei können bereits Nieten oder Schrauben als Halterung vorher angebracht werden. Anschließend wird der Metallträger in die gewünschte Form gebracht. Ein solcher vorgeformter Metallträger kann im Druckgussverfahren hergestellt sein.

Die EP 0 612 609 A1 offenbart ein Verfahren zur Herstellung eines furnierten und gebogenen Verkleidungsteils aus einem Holz-/Metallaminat. Bei dem bekannten Verfahren wird die zu fumierende Seite des Verkleidungsteils zunächst vorbehandelt, beispielsweise geätzt, und anschließend mit einem aus einem Echtholzfurnier und einem Blindfurnier gebildeten Furnierteil zu einem Halbzeuglaminat verklebt. Hiernach erfolgt eine Oberflächenbehandlung, bei der das Verkleidungsteil geglättet und endbearbeitet wird, bevor eine Lackschicht aufgetragen wird. Das so vorbehandelte Halbzeuglaminat wird in Rohlinge zugeschnitten, die abschließend in die Einbauform geformt werden.

Das Furnier kann aus mehreren Furnierlagen mit unter der Sichtfläche angeordneten Blindfurnieren bestehen. Die Fumierschichten werden mit Wasserdampf vorbehandelt, um sie für den nachfolgenden Biegepressvorgang verformbar zu machen. Die Schichten werden mit einem heiß härtendem Kunststoff unter Druck- und Temperaturbeaufschlagung in einer Form in die gewünschte Gestalt auf dem Träger zu bringen. Zum Beispiel werden beiden Formteile bei einer Temperatur zwischen 100°C und 150°C über ca. 280 Sekunden zusammen gepreßt. Dabei verflüssigt sich der aufkaschierte Klebstoff und sorgt für einen Verbund des vorgeformten Trägers mit dem vorgeformten Furnier.

Anschließend wird das furnierte Formteil einer Oberflächenbearbeitung unterzogen. Insbesondere wird das Holz auf Sollmaß geschliffen, aufgerauht und mit Lack besprüht oder in einem weiteren Spritzgießvorgang mit einer Oberflächenschicht versehen. Unter Verwendung einer weiteren Spritzgußform kann unter Umständen auch ein Kunststoffträger an den Metallträger angespritzt werden.

Dieses herkömmliche Verfahren umfasst eine relativ große Anzahl von Arbeitsschritten. Außerdem ist die Zeitdauer unter hoher Hitzeeinwirkung, die zum Zusammenfügen des Trägerformteils und des Furnierformteils benötigt wird, relativ lang. Diese Faktoren begrenzen einerseits den Durchsatz bei der Produktion, andererseits muss ein mehrlagiges Fumierformteil, das der Temperaturbelastung standhält, verwendet werden.

Die Aufgabe der vorliegenden Erfindung ist es, ein Herstellungsverfahren für ein Furnierteil mit vereinfachtem Aufbau und ein Furnierteil vorzuschlagen, bei dem die Zahl der Arbeitsschritte verringert und damit der Durchsatz erhöht wird.

Diese Aufgabe wird gelöst durch ein Verfahren gemäß Anspruch 1.

Das Verfahren zur Herstellung eines furnierten Formteils, insbesondere eines Einbauteils für die Innenausstattung von Kraftfahrzeugen, das einen Träger und ein Furnier aufweist, umfasst die Schritte: Kaschieren einer Furnierplatte mit einem Klebemittel, vorzugsweise einem Heißkleber; Flexen der kaschierten Furnierplatte; Herstellen eines Verbundelements aus dem Träger und der Furnierplatte durch Verkleben mit dem aufkaschierten Klebmittel; Einbringen des Verbundelements in eine Pressform und Verformen des Verbundelements aus dem Träger und der Furnierplatte in der Pressform.

Bei dem erfindungsgemäßen Verfahren wird also zunächst ein im wesentlichen flaches Verbundelement aus der Trägerplatte, die beispielsweise aus Aluminium besteht, und der Furnierplatte gebildet. Das Verbundelement kann großflächig bereitgestellt und erst später zu einer Platine gewünschter Größe zugeschnitten werden. Das Zwischenprodukt kann somit flexibel und bedarfsweise vor der Formgebung des Einbauteils konfektioniert werden. Insbesondere kann auch die im Stand der Technik relativ lange Wärmebehandlung zum Verbund des Metallteils mit der Furnierplatte verringert werden. Aufgrund der geringeren Temperaturbelastung ist es möglich, ein einlagiges Furnier zu verwenden, das hinsichtlich der Dicke wesentlich dünner sein kann als die Sichtlage der Furnierschichtung beim Stand der Technik. Infolgedessen ist das Endprodukt leichter und somit insbesondere für Anwendungen im Automobilbereich vorteilhaft.

Insbesondere kann eine Bearbeitung der Oberfläche der Furnierplatte nach der Herstellung des Verbundelements, jedoch noch vor der Verformung des Verbundelements erfolgen. Durch die Bearbeitung einer großflächigen, im wesentlichen ebenen Oberfläche sind die entsprechenden Bearbeitungsschritte wesentlich vereinfacht. Eine Konfektionierung des vorbehandelten Verbundelements mit der möglichst weitgehend fertig gestellten Oberfläche kann in einem späteren Schritt durchgeführt werden.

In einer bevorzugten Ausführungsform kann das Verbundelement durch Verpressen der Trägerplatte mit der Furnierplatte im Strangverfahren hergestellt werden. Die Metallplatte und die Furnierplatte werden dabei kontinuierlich über Rollen einander zugeführt und verbunden. Dies ist produktionstechnisch besonders günstig und trägt zu einer Durchsatzerhöhung wesentlich bei. Außerdem kann dadurch die Wärmezufuhr für die einzelnen Bauteile, insbesondere für die Furnierplatte, verringert werden. Dies reduziert die Energiekosten erheblich und reduziert auch die Temperaturbelastung des Furniers sowie bereits aufgetragener Oberflächenlacke.

Die Bearbeitung der Oberfläche der Furnierplatte kann insbesondere das Schleifen auf Sollmaß umfassen. Da auch dieser Verfahrensschritt großflächig auf ebener Fläche erfolgen kann, sind Zeitersparnis und eine Durchsatzsteigerung zu erzielen.

Die Bearbeitung der Oberfläche der Furnierplatte kann auch das Auftragen eines Lacks umfassen.

Statt des herkömmlichen Lackierens kann wegen der großflächigen Bearbeitung der ebenen Oberfläche der Lack mit Walzen aufgetragen werden.

Das Konfektionieren kann insbesondere nach der Bearbeitung der Oberfläche der Furnierplatte und vor dem Verformen des Verbundelements erfolgen. Das Verbundelement wird erst vor dem Verformen des Verbundelements auf die erforderliche Größe zugeschnitten. Diese Maßnahme bewirkt eine flexiblere Gestaltung des gesamten Produktionsprozesses. Die Verbundelemente können als Zwischenprodukt vor dem Verformen in Einheiten einheitlicher Roh-Größe gelagert und bei Bedarf zugeschnitten werden.

Nach dem Verformen kann zusätzlich ein Kunststoffträger an der im Verbund verformten Trägerplatte befestigt, insbesondere angeklebt oder im Spritzgießverfahren angegoßen werden.

Erfindungsgemäß wird auch ein furniertes Formteil vorgeschlagen, insbesondere für die Innenausstattung von Kraftfahrzeugen, das einen Träger aus einem formbaren Blech und ein Furnier aufweist. Vorzugsweise wird dieses Formteil nach einem der oben beschriebenen Verfahren Formteil.

Durch den vorteilhaften Produktionsprozess kann als Furnier ein nicht mehrschichtiges Furnier verwendet werden, das wesentlich dünner ist als im Stand der Technik. Die Furnierplatte weist damit keinen Unteraufbau auf, sondern kann lediglich aus einer einzigen Sichtfurnierschicht bestehen. Das furnierte Formteil ist somit einfach im Aufbau und leichter als herkömmliche furnierte Formteile.

Insbesondere kann der Träger im wesentlichen aus einem Metallblech, beispielsweise aus Aluminium, bestehen.

Die Furnierplatte wird in der Regel im wesentlichen aus einer Holzschicht (z.B. aus Edelholz) bestehen, deren Oberfläche die Sichtfläche ist.

Weitere Merkmale und Vorteile des Verfahrens und der Vorrichtung ergeben sich aus der nachfolgenden Figurenbeschreibung. Es zeigen:
- Fig. 1: eine schematische Darstellung der wichtigsten Verfahrensschritte eines herkömmlichen Verfahrens;
- Fig. 2: eine schematische Darstellung wesentlicher Verfahrensschritte des erfindungsgemäßen Verfahrens;
- Fig. 3: eine schematische Darstellung der Rohplatine, und
- Fig. 4: eine schematische Teil - Schnittdarstellung des Formteils.

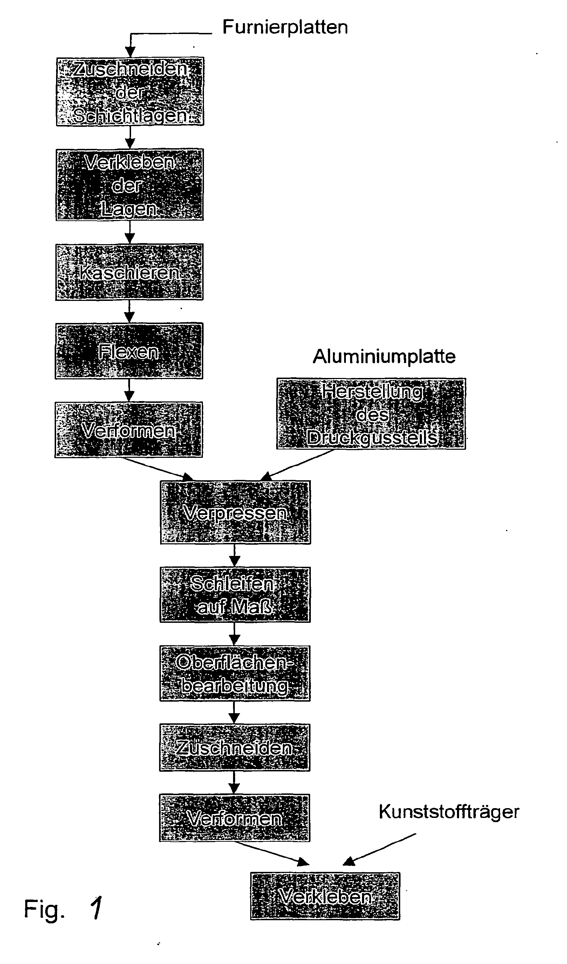

In Figur 1 sind die wichtigsten Verfahrensschritte nach einem herkömmlichen Herstellungsverfahren für das furnierte Formteil dargestellt.

Bei einem solchen Verfahren gehen dem Verpressen des Formelements (1) mehrere und jeweils aufwändige Bearbeitungsschritte voraus. Insbesondere muß eine mehrschichtige Furnierplatine durch Verkleben einzelner Lagen hergestellt werden. Auch muß das Trägerteil, meist ein Aluminiumdruckgussteil, bereits vor dem Zusammenfügen der einzelnen Bestandteile in ihre endgültige Form vorliegen, damit das mehrlagige Furnier in der Pressform maßgenau aufgelegt werden kann. Die Temperaturbelastung beim Verpressen der beiden Formteile ist wesentlich höher als beim erfindungsgemäßen Verfahren. Der gesamte Pressvorgang dauert, abhängig von verarbeiteten Material, insbesondere des Kunststoffmaterials, bis zu 5 Minuten.

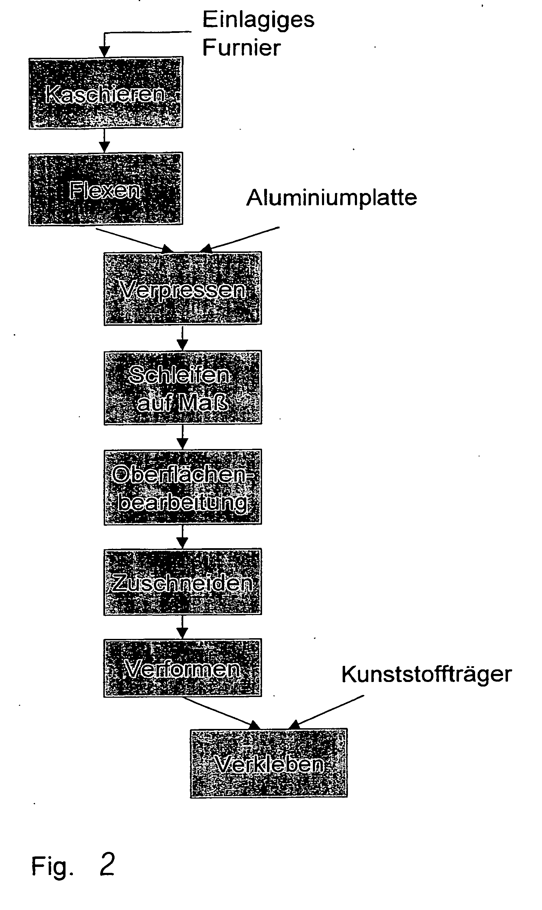

Figur 2 zeigt die wichtigsten Verfahrensschritte eines bevorzugten Ausführungsbeispiels des erfindungsgemäßen Verfahrens. Beim erfindungsgemäßen Verfahren werden eine großflächige Aluminiumplatte, vorzugsweise ein Alublech, mit einer Dicke von ca. 0,3 mm als Träger (3) und eine einlagige Furnierplatte (4) als Ausgangsmaterial für das Formteil bereitgestellt.

Falls nötig, können Befestigungselemente (6) direkt an den Aluminiumträger (3) angeklebt, angespritzt oder anderweitig befestigt werden.

Auf die Rückseite der im Rohmaß (ca. 0,55 mm Dicke) vorliegenden Furnierplatte (4) wird ein Adhesiv aufkaschiert. Anschließend wird die Furnierplatte (4) geflext, d.h. durch Aufbrechen der Struktur flexibel gemacht. Der Vorgang des Flexens besteht im wesentlichen darin, daß die Furnierplatte ein- oder mehrmalig über Kanten oder Radien (Walzen) gezogen oder geführt wird, wodurch dem Holz eine weiche Struktur verliehen wird.

Bereits im nächsten Schritt kann die Furnierplatte (4) auf die Aluminiumplatte aufgeklebt werden. Die beiden Platten werden dabei in einer Walzstraße durch Rollen hindurch einander zugeführt und unter Temperatureinwirkung im Strangverfahren verpresst. Bei dem Zusammenfügen der ebenen Elemente kann die Dauer der Temperatureinwirkung - und damit die Temperaturbelastung, insbesondere für das Furnier - reduziert werden. Dadurch wird die Verwendung eines einlagigen Furniers ermöglicht. Alternativ zum Strangverfahren kann auch ein Verfahren gewählt werden, bei dem die Materialien tafelweise miteinander verklebt werden.

Gemäß der Erfindung wird im Anschluss an das Verkleben der Materialien die Oberfläche auf Maß, etwa auf 0,25 bis 0,35 mm Dicke, geschliffen.

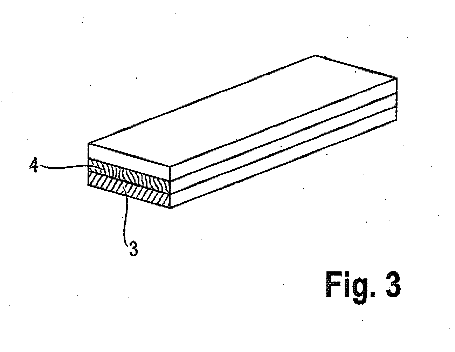

Die auf Maß geschliffene, im wesentlichen ebene Oberfläche der Furnierplatte wird mehreren Bearbeitungsschritten unterzogen. Die Oberflächenbearbeitung umfasst beispielsweise das Kitten von Fehlstellen, Aufrauhen, Putzen, Schleifen, Glätten, Beizen, Fräsen, ein Polieren der Oberfläche, usw.. Neben diesen üblichen Verfahrensschritten kann die Oberfläche des Furniers bereits an dieser Stelle beschichtet, z.B. lackiert werden. Die Beschichtung bzw. Lackierung kann auf die ebene Oberfläche gegossen oder aufwalzt werden. Eine solche Verfahrensweise ist außerordentlich umweltverträglich, da keine Lackpartikel freigesetzt werden. Die Oberfläche kann anschließend geschliffen und poliert werden. Eine Rohplatine dieser Art ist in Figur 3 dargestellt. Durch dieses Verfahren ist es möglich, die endgültige Sichtoberfläche bereits vor dem Verformen des Verbundelements herzustellen. Nach dem Entformen kann lediglich ein leichtes Nachpolieren erforderlich sein, um die Trennmittel zu entfernen.

Die Verbundelemente können großflächig in noch nicht zugeschnittenen Einheiten gelagert werden. Damit liegt bereits ein Zwischenprodukt mit fertiger Oberfläche vor, welches lediglich noch zugeschnitten und verformt werden muss.

Außerhalb des Sichtbereichs können an vorbestimmten Stellen Schnitte und Öffnungen zur Aufnahme von während des Verformens auftretenden Verspannungen ausgebildet werden.

Nach dem Zuschnitt erfolgt das Verformen des Verbundelements durch die Ausbildung einer Kavität mittels eines Stempels. Es hat sich gezeigt, dass die Oberflächenbeschaffenheit des Furniers bei geeigneter Gestaltung der Form durch die Verformung nicht beeinträchtigt wird.

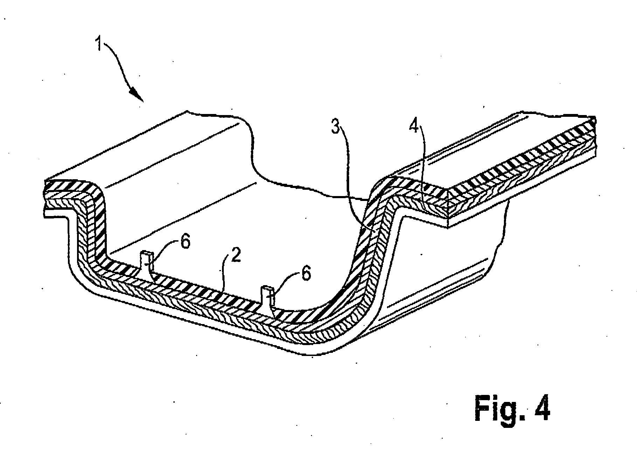

Das endgültige Bearbeiten eines Formteils (1) gemäß Figur 4 auf Sollmaß und eine eventuelle Oberflächenbearbeitung erfolgt dagegen gemäß dem Stand der Technik, wie in Figur 1 dargestellt, am bereits fertigen verformten Bauteil. Anschließend kann das fertige Furnier - Formteil unter Umständen mit einem Kunststoffträger (2) verbunden, insbesondere verklebt werden. Alternativ dazu kann gegebenenfalls der Kunststoffträger auch bereits während des Pressvorgangs angespritzt werden.

Auf diese Weise entsteht durch das erfindungsgemäße Verfahren ein furniertes Formteil leichter Bauweise mit einlagigem Furnier.

## Patentansprüche

1. Verfahren zur Herstellung eines furnierten Formteils, insbesondere eines Einbauteils für die Innenausstattung von Kraftfahrzeugen, das einen Träger und ein einlagiges Furnier aufweist, umfassend die Schritte:
Kaschieren einer einlagigen Furnierplatte mit einem Klebmittel;
Flexen der kaschierten, einlagigen Fumierplatte;
Herstellung eines Verbundelements aus dem Träger und der einlagigen Furnierplatte durch Verkleben mit dem aufkaschierten Klebmittel;
Einbringen des Verbundelements in eine Pressform, und
Verformen des Verbundelements aus dem Träger und der einlagigen Furnierplatte in der Pressform.

2. Verfahren nach Anspruch 1, **dadurch gekennzeichnet, dass** das Verfahren zusätzlich eine Bearbeitung der Oberfläche der Furnierplatte nach der Herstellung des Verbundelements und vor der Verformung des Verbundelements umfasst.

3. Verfahren nach einem der vorhergehenden Ansprüche, **dadurch gekennzeichnet, dass das** Verbundelement durch Verpressen der Trägerplatte und der Furnierplatte im Strangverfahren hergestellt wird.

4. Verfahren nach einem der vorhergehenden Ansprüche 2 oder 3, **dadurch gekennzeichnet, dass** die Bearbeitung der Sichtfläche das Schleifen des Furniers auf dem Verbundelement auf Sollmaß umfasst.

5. Verfahren nach einem der vorhergehenden Ansprüche 2 bis 4, **dadurch gekennzeichnet, dass** die Bearbeitung der Sichtfläche der Furnierplatte das ein- oder mehrfache Auftragen einer Oberflächenbeschichtung, z.B. eines Lacks, sowie gegebenenfalls deren Finishbehandlung umfasst.

6. Verfahren nach Anspruch 5, **dadurch gekennzeichnet, dass** der Lack mittels Walzen aufgetragen wird.

7. Verfahren nach einem der vorhergehenden Ansprüche, **dadurch gekennzeichnet, dass** das Verbundelement vor dem Verformen auf die erforderliche Platinengröße zugeschnitten wird.

8. Verfahren nach einem der vorhergehenden Ansprüche, **dadurch gekennzeichnet, dass** ein Kunststoffträger an der im Verbund verformten Trägerplatte befestigt wird.

9. Verfahren nach Anspruch 8, **dadurch gekennzeichnet, dass** der Kunststoffträger auf die im Verbund verformte Trägerplatte angeklebt wird.

## Claims

1. A method for producing a veneered molded part, in particular a mounting part for the interior design of motor vehicles, which comprises a support and a single-layer veneer, comprising the steps:
covering a single-layer veneer sheet with an adhesive;
flexing the covered single-layer veneer sheet;
producing a composite element from the support and the single-layer veneer sheet by gluing with the laminated adhesive;
introducing the composite element into a mold and
deforming the composite element from the support and the single-layer veneer sheet in the mold.

2. The method according to claim 1, **characterized in that** the method additionally comprises a processing of the surface of the veneer sheet after the production of the composite element and prior to the deformation of the composite element.

3. The method according to one of the preceding claims, **characterized in that** the composite element is produced by pressing the support plate and the veneer sheet in a continuous process.

4. The method according to one of the preceding claims 2 or 3, **characterized in that** the processing of the visible surface comprises the sanding of the veneer on the composite element to a nominal size.

5. The method according to one of the preceding claims 2 to 4, **characterized in that** the processing of the visible surface of the veneer sheet comprises the one-time or multiple application of a surface coating, e.g., a varnish, as well as the finish treatment thereof, if applicable.

6. The method according to claim 5, **characterized in that** the varnish is applied by means of rolling.

7. The method according to one of the preceding claims, **characterized in that** the composite element is cut to the required plate size prior to the deformation.

8. The method according to one of the preceding claims, **characterized in that** a plastic support is fastened to the support plate, which is deformed in composite construction.

9. The method according to claim 8, **characterized in that** the plastic support is adhered to the support plate, which is deformed in composite construction.

## Revendications

1. Procédé pour la fabrication d'une pièce moulée plaquée, en particulier d'une pièce encastrée pour l'équipement intérieur de véhicules automobiles qui présente un support et un placage monocouche, comprenant les étapes suivantes :
contre-collage d'une plaque de placage monocouche par un agent adhésif,
flexion de la plaque plaquée monocouche contrecollée,
fabrication d'un élément composite à partir d'un support et de la plaque plaquée monocouche par collage avec un adhésif contrecollé,
application de l'élément composite dans un moule de pressage et
déformation de l'élément composite depuis un support et la plaque plaquée monocouche dans le moule de pressage.

2. Procédé selon la revendication 1, **caractérisé en ce que** le procédé comprend en supplément un traitement de la surface de la plaque plaquée après la fabrication de l'élément composite et avant la déformation de l'élément composite.

3. Procédé selon l'une des revendications précédentes, **caractérisé en ce que** l'élément composite est fabriqué par pressage de la plaque support et de la plaque plaquée dans un procédé en continu.

4. Procédé selon l'une des revendications précédentes 2 ou 3, **caractérisée en ce que** le traitement de la surface visible comprend le polissage du placage sur l'élément composite à la mesure théorique.

5. Procédé selon l'une des revendications précédentes 2 à 4, **caractérise en ce que** le traitement de la surface visible de la plaque plaquée comprend l'application unique ou multiple d'un revêtement de surface par exemple d'un vernis ainsi qu'éventuellement de son traitement de finition.

6. Procédé selon la revendication 5, **caractérisé en ce que** le vernis peut être appliqué au rouleau.

7. Procédé selon l'une des revendications précédentes, **caractérisé en ce que** l'élément composite est découpé avant la déformation à la dimension nécessaire de platine.

8. Procédé selon l'une des revendications précédentes, **caractérisé en ce qu'**un support en matière synthétique est fixé sur la plaque support déformée dans le composite.

9. Procédé selon la revendication 8, **caractérisé** le support en matière synthétique est collé sur la plaque support déformée dans le composite.
